# EUROPEAN PATENT APPLICATION

(11) **EP 0 985 503 A1**
(43) Date of publication of application: **15.03.2000**
(21) Application number: 98117080.6
(22) Date of filing: 09.09.1998
(51) Int. Cl.: B28B 5/02, B28B 5/04

(54) **A plant for ceramic dry-state decoration and forming**

(71) Applicant: Ronflette S.A., 2233 Luxembourg (LU)
(72) Inventor: Stefani, Franco, 41049 Sassuolo (MO) (IT); Gozzi, Franco, 41043 Formigine (MO) (IT)
(74) Representative: Gotra, Stefano

(57) **Abstract**

The plant for dry decorating and forming ceramic tiles comprises a conveyor and forming line (1) for loading materials to be pressed, which line (1) leads directly to and through a forming press (2), and along which line (1) is situated at least one station (3) for preparation of the loads; a plurality of frames (4), predisposed to be placed on said line (1) in successive order, each of which frames (4) is internally provided with at least one empty compartment (40) destined to contain material to be pressed; each of said frames (4) being predisposed to be perfectly centred below a mobile element of the press (2) bearing at least one punch destined to measuredly insert into the at least one compartment (40); and means for returning said frames (4), once emptied of material, from an outlet of the press (2) to a start of the line (1).

## Description

The invention relates to a plant for decorating and forming ceramic tiles in the dry state. The prior art teaches almost exclusively the application of liquid glazes on a clay support or the like, which is preformed and usually dried.

In the case of single firing or vitrified stoneware the complete production cycle comprises a succession of phases as follows: preparation of basic materials; press-forming; drying; glazing (in the damp state); firing; checking and selection/rejection; stocking.

The need to dose liquid glazes precisely on a support leads to the use of heat-drying machines which render the support sufficiently consistent for manipulation and decoration on the glazing lines.

The prior art described, which is methodically universal, requires the use of a dryer, with a consequently high energy consumption, and the use of appropriate glazing lines which, among other things, take up considerable space in the factory.

The above drawbacks are inevitable consequences inherent in the prior art.

The prior art also teaches depositing glazes in dry powder or granular form on perfectly formed supports: the glaze adhesion to the support is achieved during the firing phase immediately after the phase of deposit of the powdered glaze itself on the support.

In this situation, the aesthetic appearance of the product is prepared and predisposed principally during the loading phase of the dies of the forming presses, using several powders of different colours loaded in a determined sequence.

This is the typical case of vitrified stoneware tile production. The relative prior art teaches, speaking generally, two processes which give rise to two substantially different effects: a "full breadth" effect which is constituted by a decoration or design that develops throughout the breadth of the tile, and a surface effect that is only a few tenths of a millimetre deep.

The first of the above effects is obtained using machines which prepare the ceramic load on the back of the press-former, contemporaneously loading powders of different colours and granulometry. The product obtained exhibits a composition and structure which are substantially homogeneous throughout the breadth of the tiles. For this reason this process is particularly suitable for tiles which are to be sanded more than once (even after laying), while it is not constitutionally suitable for realising elaborate figures or designs. This process is suitable for many of the currently popular products in vitrified stoneware, having effects such as "nuances" or "layered", "toned" and in part "veined".

The second type of effect is obtained with a multiple load (usually double) in which a powder base is first deposited in the loading compartment, and only afterwards is a second powder containing a design dosed.

This process, in which the obtained effect is superficial since it does not interest the tile over its whole breadth, is however especially suitable for realising certain "veined" products in which atomised or granulated powders are used which cannot be dosed throughout the mass of the tile mainly due to problems connected with their density, which would cause difficulties during the pressing phase.

Notwithstanding the problems, the multiple loading process, it must be said, does indeed lead to high-quality products.

These realisations, however, contain serious limitations.

The main limit in loading systems for the realisation of "full breadth" products is the impossibility of realising elaborate designs, while multiple loading systems have the limit of greatly slowing down the production capacity of the press. This is because the loading compartment, in the most traditional applications, carries out the complete movement of a outward and return run for all types of powder applied, starting from the base, which is the first to be deposited.

In order not excessively to reduce productivity this alternating motion has been accelerated as much as possible. This however leads to considerable masses being subjected to swift acceleration and deceleration, giving rise to complications of a mechanical nature.

The main aim of the present invention is to overcome the limits in the prior art by realising a new plant for the production of decorated ceramic tiles which can be actuated by means of a new type of plant which completely eliminates both the dryer as an independent machine and the liquid glazing line.

An advantage of the present invention consists in the possibility of fully exploiting the production potential of the press-formers.

A further advantage of the invention consists in making considerable energy savings with respect to traditional cycles.

A further advantage derives from the fact that production lines are considerably shorter, and therefore less space-consuming with respect to traditional lines.

A still further advantage is that there is a general simplification of the whole production process, which makes automatic control easier.

To all of these advantages can be added the fact that in comparison to the prior art the whole new production process represents a step forward in ecological production, since by-production of glazing slurry is completely eliminated.

These aims and advantages and more besides are all achieved by the present invention, as it is characterised in the appended claims.

Further characteristics and advantages of the present invention will better emerge from the detailed description that follows of a preferred but non-exclusive embodiment of the invention, illustrated purely by way of a non-limiting example in the accompanying figures of the drawings, in which:

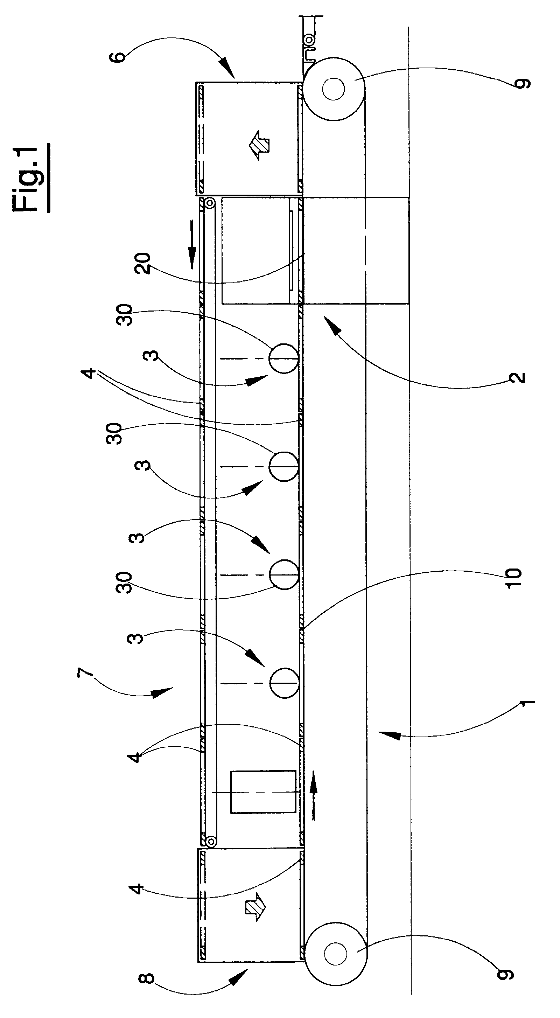

figure 1 is a vertical elevation side view of a plant according to the invention;

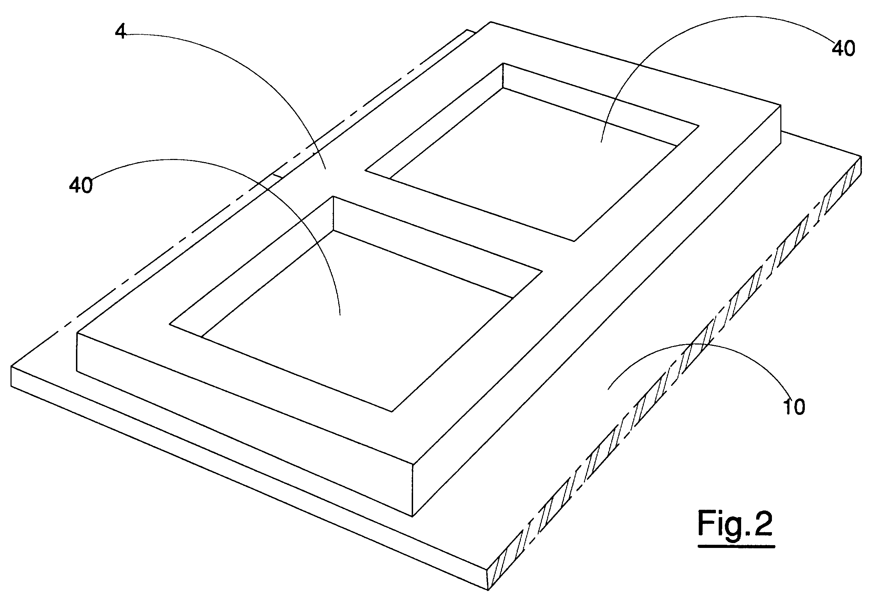

figure 2 is an enlarged-scale view of a schematic perspective view of a detail belonging to the invention.

With reference to the figures, 1 denotes in its entirety a conveyor and forming line for loaded materials moving towards a press-former 2. The line 1 passes through the press-former 2, exhibiting a tract upstream thereof along which at least one station 3 for preparing the loads is located, in which the load of powder of granular material is prepared, later to be pressed so that it assumes the shape and all other characteristics of the unfired tile destined subsequently to be subjected to firing to realise the finished product, namely the tile.

In the illustrated example, along the tract a number of the stations 3 are located in order. Most of these stations 3 use perforated rollers 30 having the function of matrix dies, distributing powders according to predetermined designs.

The line 1 comprises a conveyor belt 10, arranged horizontally, on the upper surface of which a plurality of frames 4 rest, ordered one behind another and specially equidistanced in a longitudinal direction.

Each frame 4 is internally provided with at least one empty space or compartment 40 destined to be filled with material for pressing and therefore substantially constituted by a frame internally containing one or more compartments 40.

In the illustrated embodiment each frame 4 exhibits two compartments 40 into which the material to be pressed (powder) is placed and in which the pressing itself takes place, thus forming the two tiles. In other words, these compartments are the equivalent of the dies normally used for forming ceramic tiles.

Each frame 4 is predisposed to be perfectly centred below the mobile element of the press, which is equipped with punches destined to be measuredly introduced in the corresponding compartments 40.

In the illustrated embodiment, the conveyor belt 10 is constituted by a thin metal band, ring-wound and stretched about two parallel-axis drums 9. It passes through the press 2 resting on a plane 20 of the press itself, which is arranged perpendicular to the action direction of the pressing operation.

The upper surface of the belt constitutes the bottom of the compartments 40, and is the bottom surface for the pressing action.

The bottom of the tile can be shaped by appropiately shaping the upper surface of the conveyor belt.

During the preparation of the loads, at the stations 3, and the following pressing, the single frame 4 is stably rested on the upper surface of the belt 10, by mechanical means operating between the belt and the frame and not illustrated in the figures.

Downstream of the press 2 the frames 4, by now empty, are returned to the start of the line 1 by a return line.

They are removed and raised by a lifting device 6 and transferred by means of a return line 5 comprising a horizontal conveyor 7 to a lift device 8 which deposits them singly on the conveyor belt 10 at the start of the conveyor and forming line 1.

The unfired tiles formed by the press 2 remain on the upper surface of the conveyor belt 10 while the corresponding frames 4 are raised and distanced from the device 6.

The plant of the invention enables a complete cycle of dry decoration and forming to be carried out, in which the various decoration phases are perfectly synchronised with the pressing action.

## Claims

1. A plant for dry-decorating and forming ceramic tiles, characterised in that it comprises:
a conveyor and forming line (1) for loading materials to be pressed, which line (1) leads directly to and through a forming press (2), and along which line (1) is situated at least one station (3) for preparation of the loads;
a plurality of frames (4), predisposed to be placed on said line (1) in successive order, each of which frames (4) is internally provided with at least one empty compartment (40) destined to contain material to be pressed; each of said frames (4) being predisposed to be perfectly centred below a mobile element of the press (2) bearing at least one punch destined to measuredly insert into the at least one compartment (40);
means for returning said frames (4), once emptied of material, from an outlet of the press (2) to a start of said line (1).

2. The plant of claim 1, characterised in that said line (1) comprises a conveyor belt (10), arranged horizontally, on the upper surface of which said frames rest (4); said upper surface having the function of inferiorly closing the compartments (40) of the frames (4) resting thereupon, and supporting the material to be pressed housed therein.

3. The plant of claim 2, characterised in that said conveyor (10) passes through the press (2) while contactingly resting on a plane (20) of the press (2) itself arranged perpendicularly to the direction of the pressing action.

4. The plant of claim 3, characterised in that it comprises a return line by means of which said empty frames (4) removed at the outlet of the press (2) are transferred back to the start of the line (1).

5. The plant of claim 4, characterised in that said return line (5) is located above said conveyor line (1) in which said press (2) is situated, and comprises: a lifting device (6) for removing the frames (4) located immediately downstream of the press (2) above said conveyor belt (40); a horizontal conveyor (7); a lift device (8) for transferring said frames (4) from said horizontal conveyor (7) and depositing said frames (4) at the start of said conveyor line (1).

6. The plant of claims 3 or 5, characterised in that along said conveyor and forming line (1) more than one of said stations (3) for preparing the loads of powder are situated, at least some of which use perforated rollers (30) for distributing powders in the frames (4) according to predetermined designs; said perforated rollers (30) having the function of matrix dies and rolling on the frames (4) during a translation movement of the conveyor belt (10).

7. The plant of claims 3 or 6, characterised in that said conveyor belt (10) is constituted by a thin belt ring-wound and stretched about two drums (9) having parallel axes.
